# DEMANDE DE BREVET EUROPEEN

(11) **EP 0 854 602 A1**
(43) Date de publication de la demande: **22.07.1998**
(21) Numéro de dépôt: 98400037.2
(22) Date de dépôt: 12.01.1998
(51) Int. Cl.: H04J 14/02

(54) **Dispositif démultiplexeur optique et système de communication le comportant**

(30) Priorité: 20.01.1997 FR 9700534
(71) Demandeur: ALCATEL ALSTHOM COMPAGNIE GENERALE D'ELECTRICITE, 75008 Paris (FR)
(72) Inventeur: Gautheron, Olivier, 78180 Montigny le Bretonneux (FR)
(74) Mandataire: Lamoureux, Bernard

(57) **Abrégé**

Dispositif destiné à assurer un démultiplexage spectral de signaux optiques initialement fournis chacun dans un canal correspondant à une longueur d'onde différente et simultanément transmis sous forme multiplexée à une pluralité de récepteurs optiques (2₁ à 2₄), via des moyens d'amplification optique (3₁ à 3₄) et des premiers moyens de filtrage sélectif, optique, (4₁ à 4₄), individuellement affectés chacun à un récepteur et individuellement prévus pour éliminer les signaux situés hors d'une bande optique correspondant à un des canaux.

Le dispositif comporte des seconds moyens optiques de filtrage sélectif, optique, (5₁ à 5₄) placés en amont des moyens d'amplification, chaque second moyen de filtrage, placé en amont d'un des moyens d'amplification lui-même en série avec un premier moyen de filtrage déterminé, étant aussi prévu pour éliminer les signaux situés hors de la bande admise par ce premier moyen de filtrage.

## Description

L'invention concerne un dispositif démultiplexeur optique destiné à permettre de dissocier des signaux optiques spectralement multiplexés qui sont simultanément reçus, notamment par l'intermédiaire d'une liaison optique de type dit WDM. Elle concerne aussi les systèmes et réseaux de communication incorporant de tels dispositifs.

Le démultiplexage d'une onde optique produite par multiplexage d'une pluralité de signaux optiques fournis chacun à une longueur d'onde différente, est susceptible de s'effectuer en appliquant l'onde optique reçue à un nombre de filtres optiques égal au nombre de signaux optiques distincts initialement fournis, chaque filtre étant centré sur une différente des longueurs d'onde prévues pour les signaux optiques initialement fournis. Les signaux optiques distincts sont usuellement répartis dans des canaux distincts qui sont usuellement étagés de manière régulière dans le spectre de fréquences exploité.

Un récepteur optique est placé derrière chaque filtre pour prendre en compte celui des signaux optiques démultiplexés qui est apte à transiter par le filtre considéré en raison de sa longueur d'onde qui est celle sur laquelle le filtre est centré.

Comme il est connu de l'homme de métier, les récepteurs optiques ne sont généralement capables de fonctionner que dans une plage limitée de puissance optique du signal reçu. Il est donc usuel de placer un amplificateur optique en amont d'un filtre série associé à un récepteur optique pour obtenir qu'une puissance pratiquement constante soit délivrée à ce récepteur à partir d'un signal incident dont la puissance est susceptible de varier au cours du temps.

Une telle variation de puissance d'un signal incident se produit notamment lorsque l'amplificateur, supposé placé en amont d'un filtre lui-même positionné en amont d'un récepteur, reçoit des signaux optiques parvenant par un nombre de canaux qui n'est pas toujours maintenu identique au cours du temps. La puissance obtenue en sortie de l'amplificateur pour chacun des divers canaux exploités augmente alors lorsque le nombre de ces canaux exploités diminue. Il en est conséquence de même pour le canal ou plus précisément pour le signal optique que le filtre transmet au récepteur lorsque ce canal est exploité.

De telles variations de puissance en fonction du nombre de canaux exploités introduit donc un risque de voir le récepteur fonctionner dans de mauvaises conditions, hors de la bande de puissance optimale qui lui est propre et notamment de le voir saturé.

L'invention propose donc un dispositif destiné à permettre le démultiplexage spectral de signaux optiques initialement fournis chacun dans un canal correspondant à une longueur d'onde différente et simultanément transmis sous forme multiplexée à destination de récepteurs optiques, via des moyens optiques d'amplification et des premiers moyens optiques de filtrage sélectif répartis en amont des récepteurs à raison d'un moyen d'amplification et d'un premier moyen de filtrage sélectif optique par récepteur, chaque premier moyen de filtrage étant prévu pour éliminer les signaux situés hors de la bande de fréquence optique correspondant à un des canaux.

Selon une caractéristique de l'invention, le dispositif comporte des seconds moyens optiques de filtrage sélectif optique placés en amont des moyens d'amplification, chaque second moyen de filtrage, placé en amont d'un des moyens d'amplification lui-même en série avec un premier moyen de filtrage déterminé, étant aussi prévu pour éliminer les signaux situés hors de la bande de fréquence admise par ce premier moyen de filtrage.

L'invention, ses caractéristiques et ses avantages sont précisés dans la description qui suit en liaison avec les figures évoquées ci-dessous.

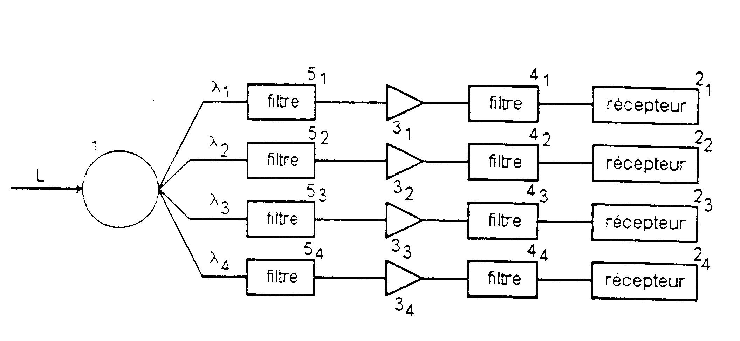

La figure unique présente un schéma d'un exemple de dispositif démultiplexeur optique selon l'invention.

Le dispositif présenté en figure unique est prévu pour pouvoir être incorporé dans tout système ou réseau de communication optique doté d'au moins une liaison où il est prévu de transmettre des signaux optiques ayant des longueurs d'onde différentes sous forme multiplexée par l'intermédiaire d'une onde optique unique, le signal multiplexé ainsi obtenu étant couramment désigné par les initiales WDM.

Dans l'exemple envisagé, une liaison L par fibre optique est supposée transmettre des signaux spectralement multiplexés sous forme d'un onde optique de longueur d'onde déterminée par exemple 1550 nm.

Cette liaison L est supposée aboutir à un noeud 1 à partir duquel il est prévu d'extraire au moins certains des signaux multiplexés que cette liaison transmet simultanément, par exemple afin de les faire prendre en compte par autant de récepteurs optiques 2, tels 2₁ à 2₄.

Ces récepteurs optiques sont par exemple du type à photodiode PIN ou à avalanche.

Comme déjà indiqué, il est habituel de placer un amplificateur optique 3 en amont de chaque récepteur optique 2, tel l'amplificateur 3₁ agissant en pré-amplificateur vis-à-vis du récepteur 2₁, pour amener le signal qui va être fourni à son entrée dans la plage optimale de capture en puissance prévue avec ce récepteur. Cet amplificateur est par exemple du type à fibre dopée erbium.

Un premier filtre sélectif, optique, 4 est inséré entre chaque récepteur optique 2 et l'amplificateur optique 3 monté en amont de ce récepteur, tel le premier filtre 4₂ entre le récepteur 2₂ et l'amplificateur 3₂, pour éliminer les signaux qui sont situés hors de la bande optique correspondant au canal que doit prendre en compte le récepteur et notamment les signaux de bruit créés par l'amplificateur optique lui-même.

Dans l'exemple proposé, chacun des quatre premiers filtres 4₁ à 4₄ est prévu pour un des quatre canaux différents qui sont respectivement centrés chacun sur une, différente, des longueurs d'onde λ₁ à λ₄ et par l'intermédiaire desquels les quatre signaux destinés à être récupérés sont identifiables après transmission simultanée par une même onde optique porteuse. Chacun des quatre récepteurs ne reçoit donc que le signal lui parvenant par l'intermédiaire du canal sélectionné par le filtre 4 en aval duquel il est placé.

Ces premiers filtres 4₁ à 4₄ sont par exemple du type interférentiel.

Selon l'invention, chaque amplificateur optique 3₁ à 3₄ est précédé d'un second filtre optique sélectif 5 qui a préférablement les mêmes caractéristiques de filtrage que le premier filtre qui est situé en aval, tel le filtre 5₃ vis-à-vis du filtre 3₃, soit pratiquement la même longueur d'onde centrale et la même bande passante. Chaque second filtre optique 5₁ à 5₄ reçoit les signaux multiplexés transportés par l'onde optique ici fournie par la liaison L et assure donc un premier filtrage à la suite duquel l'amplificateur qui le suit ne reçoit que le signal correspondant à un seul canal, tel le signal transmis par le canal centré sur la longueur d'onde λ₄ pour l'amplificateur optique 3₄ situé après le second filtre 5₄.

Il n'y a donc plus d'influence du nombre de signaux multiplexés simultanément transmis par une même onde optique sur la puissance délivrée par un amplificateur optique 3₁ à 3_{4,} dans la mesure où chacun de ces derniers ne reçoit des signaux que dans une bande qui correspond au seul canal que sélectionne le second filtre optique 5₁ à 5₄ situé en amont de lui, quel que soit le nombre de canaux réellement multiplexés transmis par la liaison L. En effet la puissance constante fournie par chacun de ces amplificateurs n'est plus susceptible d'être partagée entre les signaux correspondant à différents canaux, puisque chaque second filtre ne transmet que les signaux situés dans une bande qui ne correspond qu'à un seul canal.

Il n'y a donc pas d'amplification parasite par un amplificateur optique 3₁ à 3₄ de signal entrant situé hors de la bande correspondant au canal transmis à cet amplificateur par le second filtre 5₁ à 5₄ placé à son entrée.

Le signal transmis par un amplificateur optique, tel 3₁, au premier filtre, tel 4₁, qui le suit est filtré par ce dernier qui se charge d'éliminer les signaux de bruit créés par cet amplificateur 3₁ hors de la bande passante propre à ce filtre 4₁ qui est aussi celle du filtre 5₁.
Comme déjà indiqué, le dispositif selon l'invention est destiné à équiper divers systèmes de communication optique et il est notamment susceptible d'être exploité dans des réseaux maillés de liaisons optiques. Chaque système comporte alors une pluralité ou au moins un dispositif destiné à permettre le démultiplexage spectral de signaux optiques initialement fournis à des longueurs d'onde différentes en vue de leur transmission simultanée par l'intermédiaire d'une liaison par fibre optique. Chacun des signaux optiques initiaux est alors récupérable par démultiplexage à l'aide d'un dispositif tel que décrit ci-dessus. Comme déjà indiqué, un tel dispositif comporte alors au moins un récepteur optique relié, via au moins un moyen d'amplification optique et un premier moyen optique de filtrage sélectif, en amont desquels est placé un second moyen de filtrage sélectif ayant mêmes caractéristiques de filtrage que le premier moyen de filtrage auquel il est associé pour éliminer les signaux situés hors de la bande optique correspondant à un même des canaux transmis multiplexés.

## Revendications

1. Dispositif destiné à permettre le démultiplexage spectral de signaux optiques initialement fournis chacun dans un canal correspondant à une longueur d'onde différente et simultanément transmis sous forme multiplexée à une pluralité de récepteurs optiques (2₁ à 2₄), via des moyens d'amplification optique (3₁ à 3₄) et des premiers moyens de filtrage, sélectif, optique, (4₁ à 4₄) répartis en amont des récepteurs à raison d'un moyen d'amplification et d'un premier moyen de filtrage par récepteur, chaque premier moyen optique de filtrage étant prévu pour éliminer les signaux situés hors de la bande optique correspondant à un des canaux, caractérisé en ce qu'il comporte des seconds moyens optiques de filtrage, sélectif, optique, (5₁ à 5₄) placés en amont des moyens d'amplification, chaque second moyen de filtrage, placé en amont d'un des moyens d'amplification lui-même en série avec un premier moyen de filtrage déterminé, étant aussi prévu pour éliminer les signaux situés hors de la bande admise par ce premier moyen de filtrage déterminé.

2. Dispositif, selon la revendication 1, caractérisé en ce que les seconds moyens optiques de filtrage sont respectivement constitués chacun par un filtre optique, de type interférentiel, qui est centré sur la même longueur d'onde que le premier moyen de filtrage en amont duquel il est relié et qui a même bande passante que ce premier moyen.

3. Système de communication et notamment réseau de liaisons optiques comprenant au moins un dispositif destiné à permettre le démultiplexage spectral de signaux optiques initialement fournis chacun dans un canal correspondant à une longueur d'onde différente et simultanément transmis sous forme multiplexée à une pluralité de récepteurs optiques (2₁ à 2₄), via des moyens d'amplification optique (3₁ à 3₄) et des premiers moyens optiques de filtrage, sélectif, optique, (4₁ à 4₄) répartis en amont des récepteurs à raison d'un moyen d'amplification et d'un premier moyen de filtrage par récepteur, chaque premier moyen de filtrage étant prévu pour éliminer les signaux situés hors de la bande optique correspondant à un des canaux qui diffère avec chaque récepteur, caractérisé en ce qu'il comporte au moins un dispositif selon l'une des revendications 1, 2.
